Europäisches Patentamt

European Patent Office

Office européen des brevets

(19)

(11) **EP 1 211 843 A1**

(12) **EUROPEAN PATENT APPLICATION**

(43) Date of publication:
**05.06.2002 Bulletin 2002/23**

(51) Int Cl.$^7$: **H04L 12/24**

(21) Application number: **00410146.5**

(22) Date of filing: **30.11.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Hewlett-Packard Company,**
**A Delaware Corporation**
**Palo Alto, CA 94304 (US)**

(72) Inventor: **Richard, Bruno**
**38920 Crolles (FR)**

(74) Representative: **Lloyd, Richard Graham**
**Intellectual Property Section,**
**Legal Department,**
**HEWLETT-PACKARD FRANCE,**
**Etablissement de Grenoble**
**38053 Grenoble Cedex 9 (FR)**

(54) **Process and apparatus for automatic topology discovery**

(57)    A process and apparatus for automatically discovering the topology and components of an intranet network comprising at least one sub network to which are attached a set of devices complying with the TCP/IP protocol. The invention takes advantage of the existence of the ICMP layer existing in the TCP/IP layer for the purpose of determining the sub network of a given device. Once the sub network has been determined, as well as the subnet mask, the process determines the other sub networks which may co-exist within the Intranet. This is achieved by means of a computation of different sub network configurations, and for each configuration, the process successively generates and transmits ICMP requests to two different broadcast addresses, the answers of which being used for testing and validating the different configuration and the subnet masks.

Fig. 5

**EP 1 211 843 A1**

## Description

## Technical field of the invention

The invention relates to telecommunications and more particularly to a process and apparatus for automatically discovering the architecture of an Intranet network, including the sub networks and the devices.

## Background art

The development of computers, of telecommunications and of the Internet increases the complexity of the tasks which are assigned to the network manager of a company or an organization, also known as the Information Technology (I.T.) Administrator. As the complexity of the networks tends to continuously increase, with the multiplication of the routers and the sub networks forming the Intranet of that company or private organization, the tasks for managing the different elements composing that Intranet, including the nodes, the computers, the printers, the switches, the hubs and the modems, reveal more and more difficult for the IT Administrator. Many companies and private organizations may wish to entrust to external professionals the management of their Intranet networks.

In order to satisfy the requirements of their clients, and for the purpose of offering high-value added services, IT professionals need to be capable of rapidly elaborating a precise and comprehensive description of the different components forming an existing Intranet.

Different tools are known for facilitating the management of devices, printers, routers, switches and computers composing an Intranet network. HP Open-View ™ manufactured by Hewlett Packard Company, IBM TIVOLI ™ manufactured by IBM Corp. , CS Unicenter TNG etc. are known solutions for achieving that goal. HP TopTools ™ manufactured by the Applicant of the present application is another facility which provides network devices and network nodes management. While those tools provide facilities for gathering information relating to the different devices attached to an existing network, for the purpose of achieving effective and reliable services, it should be noticed, however, that they all rely on a preliminary knowledge, as precise as possible, of the architecture of the Intranet network to be handled. Generally speaking, the prior art solutions necessitate that the IT Administrator manually develops a precise description of the network which is to be considered and managed, including the sub networks, the network settings as well as the configuration (i.e. the sub network mask and gateways). When that information has been gathered, the discovery of the different devices can then be launched by the prior art solutions.

Very often however, the IT professionals who receive the task of managing a client Intranet have no precise idea of the particular architecture of the network which is to be handled. They may simply be not aware of the number of machines composing the intranet network, the different sub networks therein included and last, but not least, the different sub network settings.

The use of agents may somewhat improve the situation. In this approach, a set of agents are installed in the different devices which compose the Intranet network, including the routers, the PC computers, the printers etc... By accessing the Simple Network Management Protocol (SNMP), as well as the Desktop Management Interface (D.M.I.) or the Windows Management Interface (W.M.I.) known from Microsoft ™ for instance, the agents become capable of extracting basic information which can be reported and centralized for the purpose of elaborating a description of the network. However, many devices might remain out of the scope of the discovery process, simply because the appropriate agent cannot be, or has not actually been installed. An IT professional who receives the task of handling a complex Intranet network, and who wishes to offer high-value added services to his clients can simply not rely on the fact that all the devices which compose the network are actually fitted with the appropriate agent.

There are therefore many circumstances where an IT professional is faced with the general problem of elaborating a comprehensive description of an existing Intranet network, even in the case where he is not aware of the actual configuration and the architecture of that network and the different sub networks therein included. There is a definite need for a simple and direct mechanism for automatically discovering the different components of an Intranet network, including the different sub networks.

The problem to be solved by the present invention is to design a process which permits an automatic discovery of the topology of an intranet network, including the different sub networks and the sub network settings and configuration, without the use of a specific agent which need to be installed into the different devices.

Additionally, there is a desire to elaborate an automatic mechanism which does not require any manual configuration of the parameters and which can be used for automatically monitoring the sub networks architecture of an Intranet network, and the devices thereto attached.

## Summary of the invention

It is an object of the present invention to provide a process for automatically discovering the topology of an existing intranet network, including the different sub networks, without requiring the installation of any specific agent.

It is another object of the present invention to provide a process for automatically discovering the devices which are attached to an intranet network.

It is another object of the present invention to provide a pluggable device which allows the automatic discovery of the Intranet network architecture, including the settings and configuration, for the purpose of facilitating network management.

These and other objects are achieved by the present invention which is defined in the independent claims. Basically, there is provided a process which can be used for discovering an intranet network comprising at least one sub network to which are attached a set of devices complying with the Transfer Control Protocol/Internet Protocol (TCP/IP). The invention takes advantage of the existence of the Internet Control Message Protocol (I.C.M.P.) protocol in the TCP/IP layer, such as defined in the Request For Comments 792 (R.F.C.), which is originally installed in the devices, for the purpose of determining the local sub network of a given device. Once the sub network has been determined, as well as the subnet mask, the process determines the other sub networks which may co-exist within the network. This is achieved by computing a sequence of different sub network configurations, and for each configuration the process successively generates and transmits ICMP requests, the answers of which being used for testing and validating the different configuration and the subnet masks.

In one embodiment, the process is run in a machine which is located within an Intranet network by means of an existing browser installed within that machine. For each sub network which is to be tested and validated, the process computes a set of two different broadcast addresses, which are used for the transmission of an *ICMP Echo request.* An answer received for the two broadcast addresses is representative of an existing valid sub network.

Preferably, the broadcast addresses are given by the following:

    BC1 = IP AND SubnetMask
    BC2 = (IP AND SubnetMask) OR (NOT Subnet-Mask)

where IP represents the Internet Protocol address assigned to said particular device where said process is being run, and the SubnetMask is the value of the mask corresponding to the sub network configuration which is to be tested and validated.

By computing and validating different sub network configurations, there is achieved the elaboration of a comprehensive description and knowledge of the architecture of an existing Intranet network. Since the mechanism only relies on a TCP/IP stack existing in the devices, no additional agent is required for the discovery process. The discovery mechanism only requires the execution of the process in one single machine which is located inside the bounds of the Intranet network.

Once the sub network configuration has been recognized as valid, the process uses successive Simple Network Management Protocol (SNMP) requests for the purpose of addressing the range of the discovered sub network, for the purpose of extracting and gathering useful information concerning the devices attached to that sub network.

In one embodiment, the SNMP requests permit to access the Management Information Base (MIB) of the routers existing in the sub network.

In one embodiment, the process can be run in a specifically designed pluggable machine or device which is attached to one sub network of the Intranet network to be discovered. The pluggable device includes means for allowing a connection to one Intranet and means for achieving a self IP configuration for the purpose of receiving an IP address. Once it has received its address, the device detects the local subnet work and then computes a set of sub network configurations which are likely to be included within the Intranet network. A set of ICMP requests transmitted to two broadcast addresses are successively used for validating the actual sub network configurations.

Once the different sub networks are discovered, the process elaborates a comprehensive description of the network by gathering information relating to the different devices which are attached to the Intranet network.

**Description of the drawings**

An embodiment of the invention will now be described, by way of example only, with reference to the accompanying drawings, wherein:

Figure 1 illustrates a general architecture of an Intranet network which is connected to the Internet, and comprising three sub networks.

Figure 2 illustrates the assignment of the IP addresses to the different sub networks composing the Intranet of figure 1.

Figure 3 is a flow chart illustrating a first discovery process which can be used for gathering a rough preliminary description of the architecture of an Intranet network.

Figure 4 shows an improvement brought to the discovery procedure of the local sub network to which is attached a given device.

Figure 5 illustrates a second discovery process, based on the improvement of figure 4, and which permits deeper insight within the Intranet network.

Figures 6 and figure 7 respectively illustrate two particular embodiments of the computation mechanisms of the candidate sub networks which are used in the second discovery process of figure 5.

Figure 8 particularly illustrates the adaptation of the second discovery process of figure 5 for the purpose of generating a sequence of sub networks of different sizes.

## Description of the preferred embodiments of the invention

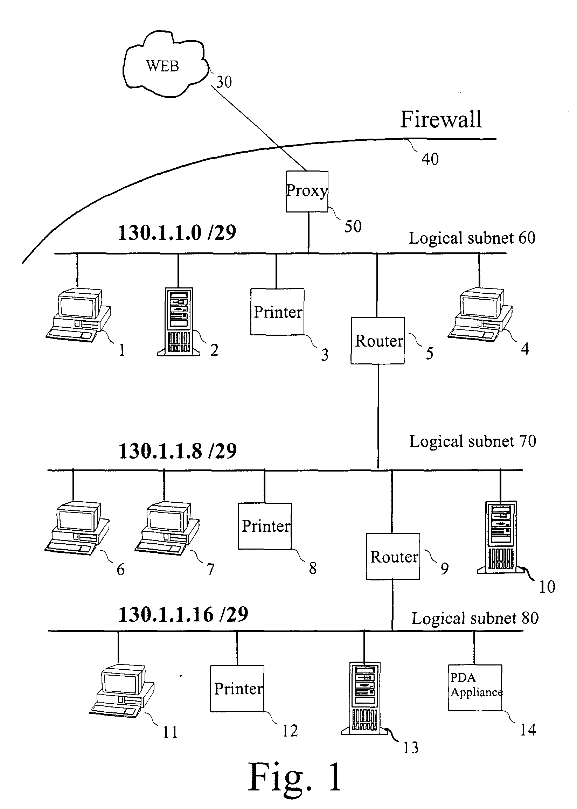

With respect to figure 1 there is illustrated the architecture of an Intranet network which is connected via a Proxy 50 and a firewall arrangement 40 to the Internet network 30. The architecture shown in figure 1 represents a logical structure of the Intranet network, representative of the logical layer-3. Therefore, the layer-2 components and devices, such as the hubs for instance, are not represented in the figure and will not be considered in the discovery process which will be explained hereinafter. The Intranet network may comprise three different logical sub networks 60, 70 and 80. Logical sub network 60 and logical sub network 70 communicate with each other via a router 5 and another router 9 serves for the communication between logical sub network 70 and logical sub network 80. Although routers 5 and 9 may clearly incorporate more than two interfaces, for the sake of clarity, only two interfaces are represented in figure 1. Logical sub network 60 further comprises, for instance, a computer client 1, a server 2, a printer 3 and a computer client 4. Logical sub network 70 includes two computer clients 6 and 7, a printer 8 and a server 10. Logical sub network 80 may comprise a computer client 11, a printer 12 , a server 13 and an additional Personal Digital Assistant (PDA) appliance 14. As will be explained above in more details, the logical sub networks 60, 70 and 80 have sub network settings which respectively are 130.1.1.0-/29-, 130.1.1.8-/29- and 130.1.1.16/29. As known by the skilled man, that representation, derived from the IPV6 standard, is a short end notation of the sub network which can be defined by an IP address and a subnet mask composed of a prefix of '1" - defining the invariant portion of the address within the sub network -, and a suffix of '0" - which is representative of the variant portion of the IP address within the sub network. For example, the representation 130.1.1.0/29 corresponds to a subnet mask having a prefix of twenty-nine "1", with a suffix of three '0', thus corresponding to the 255.255.255.248 notation sometimes used.

For the purpose of managing the intranet network, an external server (not shown in the figure 1) may be used for storing a database which will be dedicated to the control, the maintenance and the inventory of that intranet network. A comprehensive description of such a control of an Intranet network by means of an external web server can be found in European application n° 00410066.5, entitled *"Process for controlling devices of an Intranet network through the Web"* , assigned to the Assignee of the present application, and filed on 19. June 2000.

As known in the art, the firewall arrangement serves for the purpose of filtering the communication which is exchanged between the network devices included in the Intranet and the devices which are located outside the Intranet. Such a firewall is generally based on one proxy element, similar to proxy 50 which is represented on the figure 1, and two different additional routers (not shown in figure 1). A first router is generally dedicated to the interface with the Web while a second router handles the frames which are exchanged with the devices inside the Intranet. Any direct exchange of frames between the Intranet and the Web is avoided and all devices communicate through the proxy, thus substantially securing the internal organisation of the Intranet.

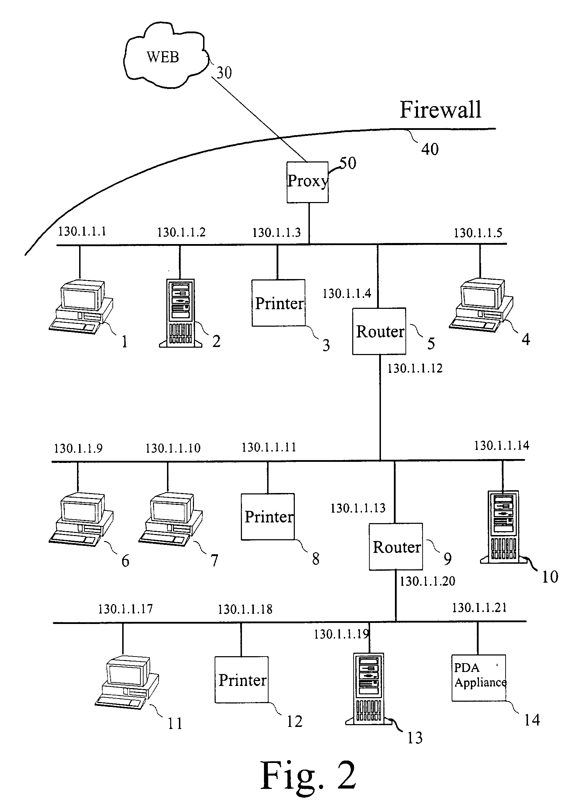

Figure 2 shows the distribution of the different Internet Protocol (IP) addresses to the different devices composing the Intranet network, and summarized hereinafter:

| Logical sub network 60: | |
| --- | --- |
| PC client 1: | 130.1.1.1 |
| Server 2 | 130.1.1.2 |
| Printer 3 | 130.1.1.3 |
| First Interface of Router 5 | 130.1.1.4 |
| PC client 4 | 130.1.1.5 |

| Logical sub network 70 | |
| --- | --- |
| PC client 6: | 130.1.1.9 |
| PC client 7: | 130.1.1.10 |
| Printer 8: | 130.1.1.11 |
| Second interface of Router 5 | 130.1.1.12 |
| First interface of Router 9: | 130.1.1.13 |
| Server 10: | 130.1.1.14 |

| Logical sub network 80: | |
| --- | --- |
| PC client 11 | 130.1.1.17 |
| Printer 12 | 130.1.1.18 |
| Server 13 | 130.1.1.19 |
| Second interface of Router 9 | 130.1.1.20 |
| PDA appliance: | 130.1.1.21 |

The automatic discovery mechanism which will be described now allows the elaboration of a comprehensive description of the topology of the Intranet, including the sub networks and the configuration settings, as well as the IP addresses of the different devices. In the particular case of the architecture of figure 2, the auto-discovery process produces information which can be reported in a table, or in an Extended Markup Language (XML) document for the purpose of transmitting it to an external server. Such information is particularly useful for IT administrators concerned with network management.

The discovery process is based on a program which runs in one machine or device which is located within the Intranet, for instance in client computer 7.

Different embodiments may be used for executing that discovery process.

In a first embodiment the program may be manually launched by the IT administrator on the machine 7.

In a second embodiment, the process may be directly and automatically executed on one machine - e. g. computer 7 of logical sub network 70. This can be done by means of a registration procedure to an external web portal dedicated to network management, where the user creates a connection to an external server by means of a HTTP standard request to an external server by using the conventional browser existing in the console or computer 7, such as, for instance, *Internet Explorer™* 4 or 5 (manufactured by Microsoft Corp.) or *Netscape Navigator™* (manufactured by Netscape Communications Corp.). The communication can be secured by the use of the HTTPS (RFC 2660) protocol. The registration may then be followed by the transmission of an installation package of an agent - a so-called Intranet discovery Agent - to computer 7. Preferably, the package may be designed for a setup procedure for Windows ™ 9x or Windows ™ NT type machines, and comprises reference to the newly registered account. More particularly, the package is a signed executable file which supports automatic extraction and installation, as well as unattended setup. The Intranet Discovery Agent may also be directly received as an attachment of an electronic mail. For Windows ™ 9x type machines, a login script may also be used.

In a third embodiment, the discovery is executed by means of a specific device which is plugged to the client Intranet network, for instance in lieu of computer 7.

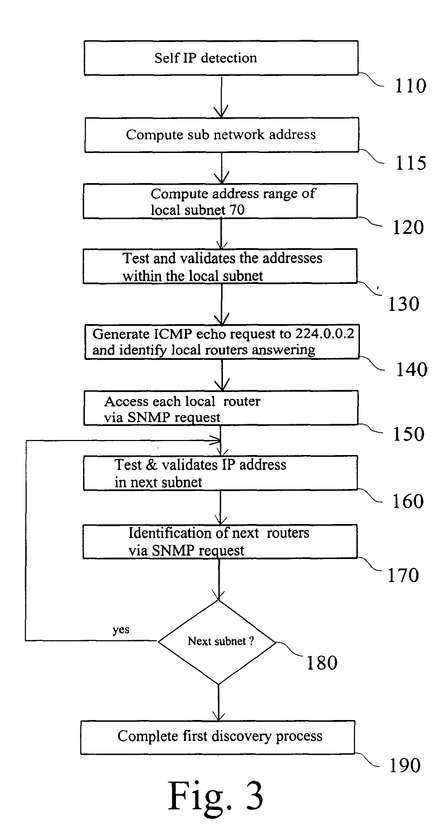

Whatever the particular embodiment being used for launching the discovery procedure, the latter may take advantage of the use of two different discovery processes. A first discovery process, which is shown in figure 3, is generally used for the purpose of elaborating a first preliminary and rough description of the different elements of the Intranet network.

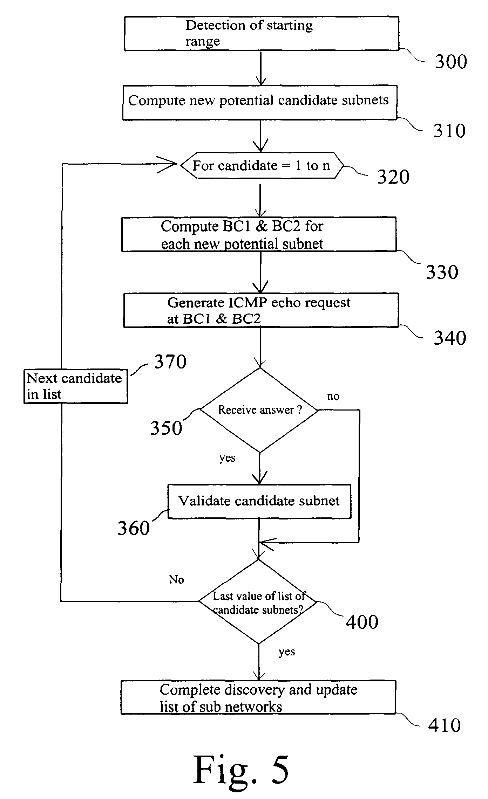

Once completed, the first discovery process will be advantageously associated with a second discovery process illustrated in figure 5 which will allow deeper insight within the Intranet network. Although the two discovery processes are successively used in the preferred embodiment, it is clear however that they may also be used independently as alternatives.

The first discovery process is represented in figure 3 and provides a first preliminary analysis of the Intranet network architecture.

In step 110, the process starts with the self IP detection of the computer 7 or of the device which has been plugged on the local sub network 70. For that purpose, the process fetches its own IP address by means of the standard Operating System (O.S.) and IP stack tools.

After the self IP address detection, the process which is executed in device or computer 7 proceeds with the discovery of the local sub network to which device 7 belongs.

In a step 115 , the process computes the local sub network address by means of the known IP address and the local *subnet* mask in accordance with the following formula:

Sub network Address = IP address AND *subnet* mask

Considering for instance that client computer 7 receives an IP address which is, for instance, :

10000010. 00000001. 00000001. 00001010 (130.1.1.10)

as well as the following sub network mask:

11111111. 11111111. 11111111. 11111000 (255.255.255. 248)

The subnet mask comprises a prefix with twenty-nine "1", indicative of an invariant portion of the sub network address with 29 bits, and a suffix which is "000", revealing a three-bit portion for the assignment of the addresses within the sub network 70.

The computation of the sub network address in accordance with the formula above leads to the following result:

Sub network address = 10000010. 00000001. 00000001. 00001000        (130.1.1.8)

As mentioned above, the preceding value of the subnet mask ('/29') reveals that the above sub network address has an invariant portion equal to the first twenty-nine bits " 10000010.00000001.00000001.00001", while the variant portion of the address - ie the last three bits - are used for assigning the different addresses within sub network 70.

Similarly, the sub network address and mask of logical sub network 60 and 70 can be expressed by the following corresponding representation 130.1.1.0 /29 (for sub network 60) and 130.1.1.16/29 (for sub network 80).

After the computation of the sub network address, the process which is executed into client computer 7 determines in a step 120 the address range available within the local sub network.

Then, in step 130, each address which is comprised within the sub network block (defined by the suffix) is tested and, possibly validated. To achieve this, the process generates a succession of *ICMP Echo Request* packets which are transmitted to those computed addresses within the sub network range. If no answer occurs, then the considered IP address is reported to be invalid. In the case of a positive answer, on the contrary, the process reports the considered address as being valid and that information is being stored within the local database of computer 7. A Simple Network Management Protocol (SNMP) request can be additionally used for extracting information regarding the type of device which is attached to the local sub network 70, and for completing the information which is stored within the local database of computer 7. In the preferred embodiment, there is also taken an advantageous use of the information concerning the Operating System present in the device for the purpose of identifying that device, i.e. if it is a printer, a server or a computer for instance.

In step 140, the process generates and transmits a *ICMP Echo Request* packet to a standard multicast address which is defined by 224.0.0.2 for the purpose of addressing the local routers, and for requesting a positive reply from those. This permits client computer 7 or the device which has been plugged into the sub network 70 to be informed of the addresses of the routers, which are, in the case of the figure 2, addresses 130.1.1.12 (router 5) and address 130.1.1.13 (router 9).

In step 150, the process transmits a Simple Network Management Protocol (SNMP) request to the routers which were identified in step 140. This request permits to have an access, through the SNMP agent, to the information tree structure which is stored within the considered router, and known as the Management Information Base (MIB). The MIB collects variables or nodes for different system parameters. An appropriate SNMP request is used for accessing variables defining the interfaces, including the sub networks of the considered router, the IP address relevant to the considered sub network and the mask of each sub network. A relevant variable for this investigation is 1.3.6.1.2. for instance, as well as the *ip* subtree referenced by 1.3.6.1.2.4., and also the *ip.ipForwarding* variable being defined by 1.3.6.1.2.4.1. In particular the access to the SNMP table provides with the gateway, and the Address Resolution Protocol (ARP) table relevant to the router.

In one embodiment, the SNMP requests are also used for extracting and gathering information concerning the generic properties of the devices. In particular, the nature of the operating system is being gathered, what is advantageously used by the process for clearly identifying the type (pc, printer, server) of the attached device. More particularly, the variables *system. sysDesc; system.syslocation* and *system.systcontact* are used for that purpose. The information which is gathered by means of the SNMP requests can then be reported within the local database which is contained into client computer 7, for the purpose of enriching the description of the Intranet network.

The discovery process is then extended from the local sub network 70 to the next discoverable - remote - sub networks, e.g. sub network 60. This is achieved by means of the loop of steps 160 and 170.

In step 160, the process computes the different addresses comprised within the range of addresses assigned to the considered sub network which was discovered in step 150. The process then causes the generation and the transmission of a *ICMP Echo Request* for the purpose of testing and validating the considered address.

In step 170, among the IP addresses that generated a positive answer, the process identifies the routers which are found on the considered sub network which is being investigated. Since the multicast address is 224.0.0.2 does not operate outside the local link, the identification of the router is achieved by an access to a SNMP variable, which is *ip.ipForwarding* node of the *"ip"* subtree of the MIB tree, identified by 1.3.6.1.2.4.1. A SNMP Sweep is used and the process then filters the answers received to that sweep, for the purpose of keeping a list of the sub network routers and a binding of these routers and their respective interfaces.

In step 180, a test is determined to verify whether an additional sub network may be investigated and discovered, what cause the process to possibly loop back to step 160.

When all the sub networks and routers have been successively discovered, the process completes in a step 190 the first description of the different remote sub networks which are associated with the routers identified.

As explained above, the first analysis of the Intranet network is based on the use of the SNMP agent for the purpose of progressively discovering the sub networks composing the Intranet. Indeed, since the ICMP Echo Request can be transmitted within the Intranet, up to the frontier laid down by the Firewall arrangements, all the architecture within the Intranet network is theoretically discoverable. However, in some situations, the SNMP agents might not provide the expected information, either because some devices are not fitted with the appropriate SNMP agent, or also because the SNMP agent might reserve the access to the SNMP variables to the IT administrator only. In those cases, there is clearly an obstacle to the discovery process.

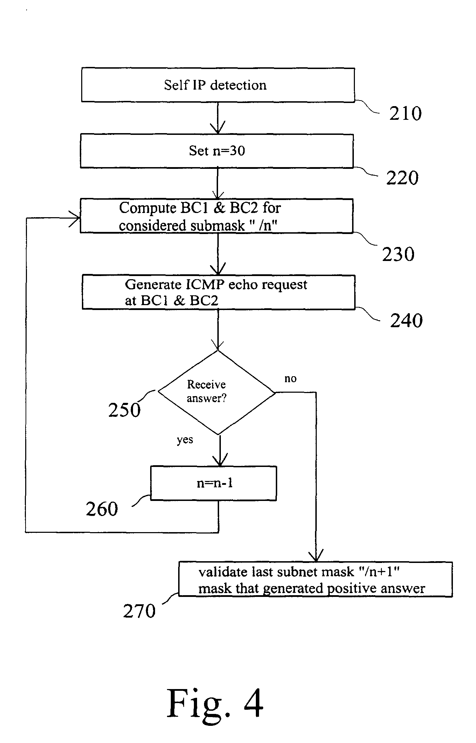

In order to enhance the discovery capabilities, and for the purpose of preparing a more thorough description of the network, an improvement to the process of figure 3 has been brought which will now be explained with more details in reference to figure 4. This improvement permits the discovery mechanism to succeed, even without any preliminary knowledge of the subnet mask.

More particularly, the process illustrated in figure 4 permits the discovery of the sub network corresponding to a given device. This is particularly useful in the case of the pluggable embodiment which is to be plugged in an existing Intranet for the purpose of discovering the architecture of the later. The process starts with a step 210 which is, similarly as in step 110 of figure 3, a self IP detection of the device or computer 7, where the device receives its IP address, for instance:

10000010. 00000001. 00000001. 00001010 (130.1.1.10)

The process then computes a sequence of subnet masks "/30", "29", "28", etc... which respectively correspond to a sequence of 4-device, 8 device, 16 device etc. sub networks to which the particular IP address could belong. It should be noted that the first and last addresses of each of these sequences cannot actually be used, so the usable sequence should be 2 device, 6 device, 14 device sub networks.

Considering the example of the computer 7 which receives the IP address 130.1.1.10, the latter is likely to belong to the following subnets:

    4-device subnet: 130.1.1.8/30
    8-device subnet: 130.1.1.8/29 (being the actual configuration of fig. 2)
    16-device subnet 130.1.1.0/28
    32-device subnet 130.1.1.0/27
    64-device subnet 130.1.1.0/26
    128-device subnet 130.1.1.0/25
    256-device subnet 130.1.1.0/24
    512-device subnet 130.1.0.0/23

Practically, for a Class-B network, the number of possible subnet masks which are likely to match the considered IP address does not exceed a number of 24 masks.

Referring back to figure 4, after having received the IP address, the process running into device 7 sets in a first step 220 the first value of the mask to the representation "/30" - in accordance with the convention explained above.

The process then enters in a loop in a step 230 for testing the current value of the subnet mask. For this purpose, the process computes a set of two different broadcast addresses BC1(n) and BC2(n) in accordance with the formulas given below:

    *BC1(n) = IP AND SubnetMask*
    *BC2(n) = (IP AND SubnetMask) OR (NOT Subnet-Mask)*

BC1(n) is a first broadcast address where the last bits are set to "0", while BC2(n) appears to be a second broadcast address which has the last bits being set to "1".

Considering, for instance, an IP address equal to 129.23.54.24 and the subnet mask equal to "/24" (i. e. 255.255.255.0 in the decimal representation), the hexadecimal corresponding values are respectively IP = 81183418h and Sub network = FFFFFF00h. Therefore, the two broadcasts addresses are then computed:

    BC1 = 81183400h AND FFFFFF00h = 129.23.54.0
    BC2 = 81183400h AND FFFFFF00h OR 000000FFh = 129.23.54.255

In a step 240, the process generates for the two computed BC1(n) and BC2(n) address a *ICMP Echo Request* which is transmitted to the network.

In a step 250 the system checks whether the *ICMP Echo Requests* have resulted in a positive answer from the network. If this happens to be the case, the current value "/n" of the subnet mask is flagged and validated. The process then proceeds in a step 260 with the checking of next value "/(n-1)" of a possible subnet mask corresponding to a broader sub network.

The process then loops back to step 230 again for the purpose of calculating and testing a new set of values of BC1 and BC2 corresponding to that new value of the subnet mask.

If the test of step 250 fails, indicating that no positive answer resulted from the two computed BC1(n) and BC2(n) values, that means that the considered sub network is not valid. This may be the case if the considered sub network extends out of the range of the addresses assigned to the Intranet network, which therefore causes the *ICM Echo Request* to be rejected by the firewall arrangement. In the case of a failure in test 250, then the process proceeds with step 270 which permits to issue the value of "/(n+1)" as the most probable representation of the subnet mask, since, generally, it corresponds to the value which lastly originated a positive answer to the BC1 and BC2 values.

Therefore it can be seen that the process successively computes and tests a sequence of possible values for BC1 and BC2 values, corresponding to different possibilities of subnet masks, and for each pair the process generates a *ICMP Echo Request.* In accordance with the answer which is returned from the network to the device 7, the process becomes capable of uniquely determining the subnet mask which corresponds to the sub network to which the computer 7 is being plugged.

Considering again the situation of sub network 70, it can be seen that computer 7 receives during self IP configuration an IP address which is equal to 130. 1. 1. 10. The process computes the sequence of sub network masks for successively considering a 8-devices wide sub network, then a 16-device wide network, then a 32 device wide network etc..., and the corresponding representations or values "/30"; "/29", "/28", "27" of the subnet masks.

The first value of the sub network mask "/30" is considered and resulted in the process looping back to step 230 again.

Similarly, the value of "/29" is then considered (corresponding to subnet mask 255.255.255. 248 where the last three bits are set to 0). For that sub network mask, the process computes in step 230 the corresponding values of BC1 (i.e. 130.1.1.8) and BC2 (i.e. 130.1.1.15), and generates the corresponding *ICMP echo request,* what causes a positive answer since the two addresses correspond to actual broadcast addresses.

The process then loops again to step 230 for the purpose of testing the next value "/28" of the subnet mask - corresponding to new values of BC1 (i.e. 130.1.1.0) and BC2 (i.e. 130.1.1.15), which will result in a failure condition in step 250.

The process then validates the value "/29" of the subnet mask for sub network 70.

When the sub network corresponding to a given device has been detected, the process then proceeds with the computation of all the addresses within the sub network range, in a similar fashion than in the process depicted in figure 3, and particularly steps 115, steps 120 and 130. A comprehensive description of all the devices which are attached to the local sub network can thus be achieved.

When the local sub network has been discovered, the process can proceed with the overall detection of all the sub networks forming the Intranet. This is made possible by use of a second discovery process, illustrated in figure 5, which has deeper insight and extended discovering capabilities.

To achieve the discovery of the different sub networks of an Intranet network, the second discovery process computes, after the determination of one given sub network (generally the one to which is attached a given device loaded with the discovery software), a sequence of all potential candidate sub networks. For each sub network being computed, the process then computes the BC1 and BC2 broadcast addresses. An *ICMP Echo Request* is then transmitted to those broadcast addresses for the purpose of validating the considered candidate sub network.

The second discovery process will now be discussed in details:

In a step 300, the process starts with the detection of the starting range. This is achieved by means of the mechanism described within reference with figure 4. The process which runs into machine 7 of the subnet 70 causes the identification of the addresses 130.1.18 and 130.1.1.15 as corresponding to the boundary limits of that subnet.

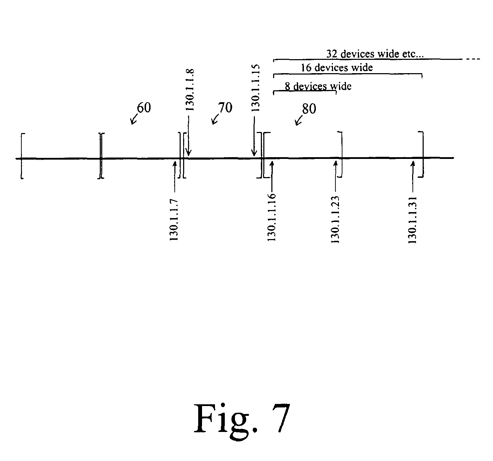

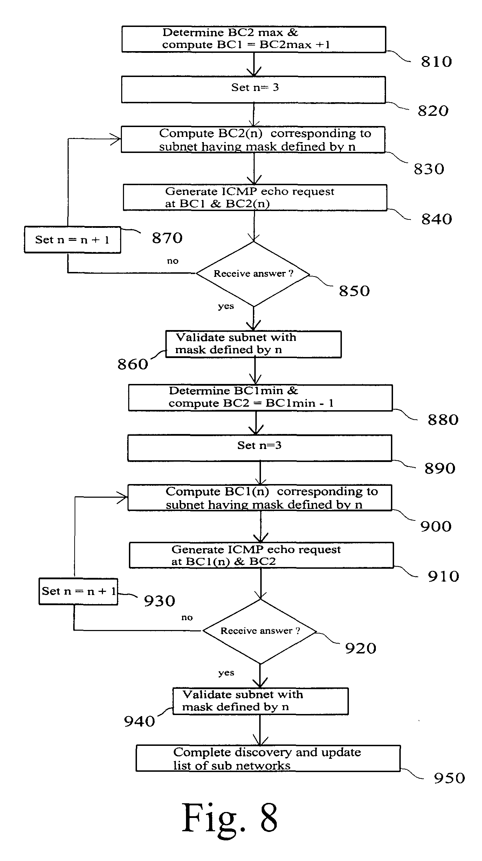

The process then proceeds with a step 310, where a list of new candidate potential sub networks and ranges are computed. Different methods may be used for that purpose, and two particular mechanisms will be discussed in details hereinafter in reference with figures 7 and 8.

Step 320 corresponds to a loop for the successive test of the different items on the list of the candidate sub networks determined in step 310.

For each item of the list of candidate sub network, the corresponding values of BC1 and BC2 broadcast addresses are computed in a step 330 in accordance with the formulas which are defined above.

In a step 340, an *ICMP Echo Request* is generated and transmitted to the computed BC1 and BC2 addresses, and the answer is awaited, and tested in a step 350.

If the test of 350 succeeds, then the considered sub network on the list of candidate sub networks is validated (what is the case of subnet 60) and the process proceeds with a step 400.

If the test of step 350 fails, the considered item is not validated as corresponding to an actual sub network belonging to the Intranet network, and the process proceeds with step 400 for the purpose of checking the next item, which is achieved by logical box 370.

If the test of a step 400 leads to a further investigation, then the process proceeds with step 370 where a next item on the list of the sub network is being considered, and the process loops back to step 310 for the purpose of processing that new item. In the case of the architecture of figure 2, the process will loop again to investigate a range having new values of BC1 and BC2 (resp. 130.1.1.7 and 130.1.1.23), what will result in the validation of the sub network 80.

When all the items of the list of candidate sub networks have been investigated, the process proceeds with a step 410 where the update of the discovery can be processed. Once the architecture of the Intranet has been discovered, the process may start a test and validation of the IP address within that Intranet in a manner similar to that of figure 3, for the purpose of elaborating a comprehensive description of the different devices attached to the network.

There will now be described two particular mechanisms which can be advantageously used for computing the sequences of potential candidate sub networks.

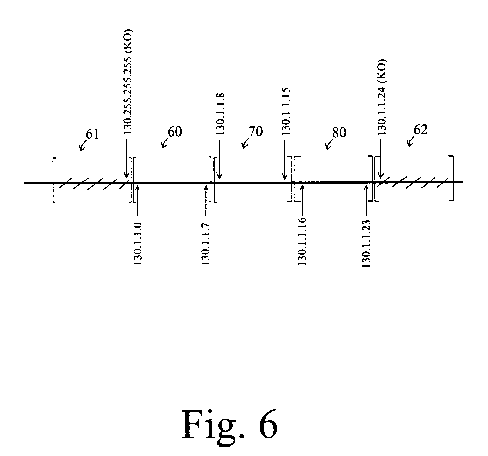

In the first mechanism, which is that illustrated in figure 6, the process computes a sequence of contiguous ranges, extending from the left to the right, and which cover the particular sub network which could already been disclosed by the first discovery process of figure 3. More particularly, the contiguous ranges have the same size and correspond to a same common mask, which is that of sub network 70 discovered in step 300, e.g. that of sub network 70. As shown in figure 6, there is computed the sequence of sub networks 61, 60, 70 (which was already revealed in step 300), 80 and 62 extending from left to right. Once computed, the BC1 and BC2 broadcast addresses corresponding to each range (and potential candidate sub network) are computed for the purpose of separately testing and validating the potential candidate sub networks. This permits to discover the sub networks 60, 70 and 80 thanks to the positive answer to the broadcast addresses 130.1.1.0 (i.e. BC1 for sub network 60); 130.1.1.7 (i.e. BC2 for sub network 60), 130.1.1.8 (i.e. BC1 for sub network 70), 130.1.1.15 (i.e. BC2 for sub network 70), 130.1.1.16 (i.e. BC1 for sub network 80) and 130.1.1.23 (i.e. BC2 for sub network 80). Conversely, since address 130.255.255.255 which corresponds to the BC2 broadcast address of candidate sub network 61 does not succeed, the sub network 61 is disregarded. Similarly, since the 130.1.1.24 address which corresponds to the BC1 broadcast address of sub network 62 does not result into a positive answer, the latter is also disregarded.

The computing of contiguous ranges of sub network, with a same common mask, therefore permits to discover additional sub networks. It should be noticed that that mechanism permits to discover sub networks even when a gap exists between two different sub networks belonging to the same Intranet. To achieve this, the test and validation of the candidate potential sub networks is continued as long as the mechanism does not detect two consecutive failure or absence of answer to the ICMP request.

A second mechanism can be used which permits to detect sub networks with different size corresponding to different mask values. The second mechanism is more particularly described with reference to figures 7 and 8. Basically, the second mechanism starts from the extreme values of the broadcast addresses which were discovered in the preceding mechanism.

In step 810, the process determines among the already discovered sub networks, the higher value of the BC2 broadcast addresses: $BC2_{max}$. With the example of figure 7, it appears that $BC2_{max}$ is equal to 130.1.1.15. The process then computes the left broadcast address of a potential candidate sub network in accordance with the following formula:

$$BC1 = BC2_{max} + 1 \text{ (e.g. 130.1.1.16)}$$

In step 820, the value n is set to a first predetermining value, for instance n= 3, for the purpose of testing and validating a first potential candidate sub network (e.g. a 8-devices wide sub network).

In step 830, the process computes the value of BC2(n) broadcast address which corresponds to the considered candidate sub network which is to be tested.

In a step 840, the process generates for the two computed BC1 and BC2(n) address a *ICMP Echo Request* which is transmitted to the network.

In a step 850 the system checks whether the *ICMP Echo Requests* have resulted in a positive answer from the network. If not, the n value is being incremented in step 870 and the process loops back to step 900 for the purpose of testing a wider sub network.

If the test of step 850 succeeds, the sub network being considered is validated.

The remaining steps of the process of figure 8 are used for discovering a candidate sub network which range of addresses is located at the extreme left position with respect to the already discovered sub networks.

For that purpose, in a step 880, the process determines the lower value of the BC1 addresses - i.e. the value $BC1_{min}$ - of the sub networks which were already discovered, and computes the BC2 broadcast address of the potential candidate sub network in accordance with the following formula:

$$BC2 = BC1_{min} - 1$$

In step 890, the value n is set to a first predetermining value, for instance n= 3, for the purpose of testing and validating a first potential candidate sub network (e.g. a 8-devices wide sub network).

In step 900, the process computes the value of BC1(n) broadcast address which corresponds to the considered candidate sub network which is to be tested.

In a step 910, the process generates for the two computed BC1(n) and BC2 broadcast address a *ICMP Echo Request* which is transmitted to the network.

In a step 920 the system checks whether the *ICMP Echo Requests* have resulted in a positive answer from the network. If not, the n value is being incremented in step 930 for the purpose of testing another candidate sub network of a higher range.

If the test of step 920 succeeds, the considered sub network is validated.

After the checking of all the possible sub networks located on the left side of the IP addresses, the discovery mechanism then completes with step 950 which is used for updating the list of sub networks.

The discovery completes with a so-called Traceroute mechanism which is used for determining the route which links the sub networks together. For that purpose, there is determined the route between a probe point and a destination host by sending packets with progressively increasing Time To Live (TTLs). Routers along the path, on seeing a packet with a zero TTL send ICMP TTL-expired replies to the sender, which gives progressively information on the path. This mechanism is interesting because it is applicable to all domains and machines (not SNMP ARP tables' reading). It presents a greater overhead than both ping and SNMP methods, because it sends to each router two probes. It's also slower because two consecutive probes sent to a router are separated by time duration to minimize instantaneous load.

Tests have shown that a given host may be reached with ICMP ECHO REQUEST packets (replies to pings), but seem unreachable with Trace route. This can be due to routers, which have a gateway code that doesn't send back TTL-expired ICMP packets, so can't participate in tracing the route with Trace route. Tests showed that quite many routers have this behavior, and in that case, Trace route, still must go on trying until the max hops is reached, and this takes too much time.

For achieving ICMP record route, a simple mechanism is based on a *Ping Record Route (Ping with -R option).* This makes ping include RECORD_ROUTE in the ECHO_REQUEST packet and displays the route buffer on returned packets. It indicates the routers crossed to reach the pinged host, and for each, the pair of interfaces involved in the routing.

The discovery process completes with the elaboration of a table of subnets filled with the subnets discovered on the Intranet, or the Local Area Network (LAN), and a table of devices filled with all the devices available through IP on the LAN.

It therefore can be seen that a discovery process can be achieved which is based on the sole existence of the TCP/IP stack in the devices. No additional agent is required for determining the different sub networks existing in an Intranet network

When the topology of the Intranet network, including the sub networks and the IP addresses of the devices, has been collected and included within a report file, e.g. a text or a report complying with the eXtended Markup Language (XML) standard XML file, the latter can be transmitted to an external server via a HTTPS POST request. Such a request may easily be conveyed throughout the firewall mechanism without requiring any change to the latter, as the HTTP and HTTPS outbound connections are usually left open in a firewall. The particular format of the HTTP GET request is defined in the well-known rules laid down in the Request For Comment (R.F.C.) 2.6.1.6, which are available at the following address http://www.w3.org/protocols. Since those rules are well known to the skilled man, they will not be elaborated further on. Use of the secure version of HTTP, HTTPS (RFC 2660) is an extension, which enables the protection of the users privacy by encrypting the profile information in transit.

The precise information relevant to the topology of the Intranet network can then be stored within an external database for the purpose of allowing an effective management, handling and inventory of the Intranet. A process for giving the control to an external web server can be found in the above mentioned European application.

**Claims**

1. Process for automatically discovering the topology and components of an Intranet network, comprising at least one sub network (70...), to which are attached devices (1, 2, ...) complying with TCP/IP protocol, said process running into one particular device (7) being assigned an IP address and comprising the steps of:

   - computing a set of sub network configurations to which the IP address of the device could belong;
   - using the ICMP layer of said TCP/IP protocol for successively testing and validating said configurations for the purpose of elaborating an extensive description of the network architecture.

2. Process according to claim 1 **characterized by** the steps of:

   - discovering a first sub network having a determined range;
   - computing a sequence of potential candidate sub networks of the same size as that said first sub network and being contiguous with said first sub network;

   - successively testing and validating by means of the ICMP layer of the TCP/IP protocol each of said potential candidate sub networks.

3. Process according to claim 1 **characterized by** the steps of:

   - discovering a first sub network having a determined range;
   - computing a sequence of potential candidate sub networks being contiguous with said first sub network, and having a range being equal to $2^n$.
   - successively testing and validating by means of the ICMP layer of the TCP/IP protocol each of said potential candidate sub networks.

4. Process according to claim 1 wherein said testing and validation are based on the computation, for each of said configurations, of a first broadcast address (BC1) and a second broadcast address (BC2) which are used for transmitting a ICMP Echo Request.

5. Process according to claim 4 **characterized in that** said first and second broadcast addresses (BC1, BC2) are computed in accordance with the following formula:

   BC1 = IP AND SubnetMask
   BC2 = (IP AND SubnetMask) OR (NOT SubnetMask)

   where IP represents the Internet Protocol address assigned to said particular device where said process is being run, and the SubnetMask is the value of the mask corresponding to the sub network configuration which is to be tested and validated.

6. Process according to claim 5 **characterized in that** the validation of the sub network is then followed by the transmission of successive Simple Network Management Protocol (SNMP) requests to the different addresses within the address range of said validated sub network, for the purpose of extracting and gathering information from the devices attached to said validated sub network.

7. Process according to claim 6 **characterized in that** said SNMP requests accesses the Management Information Base (MIB), and particularly node 1.3.6.1.2. for the purpose of gathering information relevant to the routers attached to the discovered sub networks.

8. Process according to claim 1 **characterized in that** said particular device receives an IP address by means of a self IP configuration via where the particular device is assigned an IP address and, possibly, the subnet range of the sub network to which it has been attached.

9. Process for discovering the sub network of an Intranet network to which is attached a pluggable device (7), **characterized in that** said process involves the steps of:

a) initiating (210) a self IP detection step for the purpose of detecting an IP address;
b) computing (220) a first value representative of a first subnet mask ("/n") comprising a prefix with n logical "1", said first subnet mask corresponding to a first sub network to which is likely to belong said IP address;
c) computing (230) for said value a first and second broadcast addresses (BC1; BC2);
d) transmitting (240) an ICMP Echo Request to said first and second broadcast addresses (BC1, BC2);
e) in response to a positive answer received to both said first and second broadcast addresses (BC1, BC2), validating (270) said value as being the effective value of an existing sub network connected to said Intranet.
f) decrementing n by 1 and repeating steps b)-e) for the purpose of testing new values of possible subnet masks.

10. Process according to claim 1 **characterized in that** said first and second broadcast addresses are computed in accordance with the following formula:

BC1 = IP AND SubnetMask
BC2 = (IP AND SubnetMask) OR (NOT SubnetMask)

where IP represents the Internet Protocol address assigned to said particular device where said process is being run and the SubnetMask is the value of the mask corresponding to the sub network configuration which is to be tested and validated.

11. Process according to claim 1 **characterized in that** the discovered topology is transmitted to an external server by means of a HTTP or HTTPS request for the purpose of updating an external database.

12. Apparatus for allowing the discovery of a Intranet network comprising at least one sub network; said apparatus being pluggable into said Intranet and further including:

- means for allowing a connection to said at least one sub network;
- means for achieving a self IP configuration and for receiving an IP address;
- means for computing a set of sub network configurations which are likely to be connected to said Intranet;
- means generating ICMP requests for successively testing and validating the different network configurations for the purpose of discovering the sub networks of said network.

13. Apparatus according to claim 12 **characterized by**:

- means for determining a first value representative of a first subnet mask ("/n") comprising a prefix with n logical "1", said first subnet mask corresponding to a first sub network to which is likely to belong said IP address;
- means for computing a first and second broadcast addresses (BC1; BC2) to said first value;
- means for transmitting an ICMP Echo Request to said first and second broadcast addresses (BC1, BC2);
- means for testing another value representative of a second subnet mask ("/n-1) if said ICMP Echo Requests do not provide any answer; whereby the subnet mask of the particular sub network where said apparatus is plugged can be automatically discovered.

14. Apparatus according to claim 13 **characterized in that** said first and second broacast addresses are computed in accordance with the following formula:

BC1 = IP AND SubnetMask
BC2 = (IP AND SubnetMask) OR (NOT SubnetMask)

15. An apparatus comprising program code elements for carrying a method as claimed in any of claims 1 to 11.

16. A computer program product comprising computer program code stored on a computer readable storage medium for, when executed on a computer, performing all the steps of anyone of claims 1 to 11.

WEB
30

Firewall
40

Proxy
50

**130.1.1.0 /29**
Logical subnet 60

Printer
1
2
3

Router
5
4

Logical subnet 70

**130.1.1.8 /29**

Printer
6
7
8

Router
9
10

**130.1.1.16 /29**
Logical subnet 80

Printer
11
12
13

PDA
Appliance
14

# Fig. 1

Fig. 2

| Self IP detection | 110 |

| Compute sub network address | 115 |

| Compute address range of local subnet 70 | 120 |

| Test and validates the addresses within the local subnet | 130 |

| Generate ICMP echo request to 224.0.0.2 and identify local routers answering | 140 |

| Access each local router via SNMP request | 150 |

| Test & validates IP address in next subnet | 160 |

| Identification of next routers via SNMP request | 170 |

Next subnet ? — 180

yes

| Complete first discovery process | 190 |

# Fig. 3

Self IP detection — 210

Set n=30 — 220

Compute BC1 & BC2 for considered submask " /n" — 230

Generate ICMP echo request at BC1 & BC2 — 240

250 — Receive answer? — no

yes

260 — n=n-1

validate last subnet mask "/n+1" mask that generated positive answer

270

Fig. 4

Detection of starting
range
300

Compute new potential candidate subnets
310

For candidate = 1 to n
320

Compute BC1 & BC2 for
each new potential subnet
330

Generate ICMP echo request
at BC1 & BC2
340

370
Next candidate
in list

Receive answer ?    no

350

yes

Validate candidate subnet

360

Last value of list of
candidate subnets?
400

No

yes

Complete discovery and update
list of sub networks
410

# Fig. 5

Fig. 6

Fig. 7

Fig. 8

## EUROPEAN SEARCH REPORT

European Patent Office

Application Number

EP 00 41 0146

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LIN H C ET AL: "AN ALGORITHM FOR AUTOMATIC TOPOLOGY DISCOVERY OF IP NETWORKS" ATLANTA, GA, JUNE 7 - 11, 1998,NEW YORK, NY: IEEE,US, vol. CONF. 5, 7 June 1998 (1998-06-07), pages 1192-1196, XP000901294 ISBN: 0-7803-4789-7 * page 1193, left-hand column, line 53 - page 1194, right-hand column, line 11 * | 1-3,6-9, 12,15,16 | H04L12/24 |
| A | SCHÖNWÄLDER J ET AL: "How to Keep Track of Your Network Configuration" PROCEEDINGS OF THE SEVENTH SYSTEMS ADMINISTRATION CONFERENCE (LISA VII), 1 - 5 November 1993, pages 101-105, XP002168080 Monterey, CA, USA * page 102, left-hand column, line 14 - right-hand column, line 29 * | 1-3,6-9, 12,15,16 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 31 May 2001 | Ströbeck, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)